# EUROPÄISCHE PATENTSCHRIFT

(11) **EP 2 226 151 B1**
(45) Veröffentlichungstag und Bekanntmachung des Hinweises auf die Patenterteilung: **12.10.2011**
(21) Anmeldenummer: 09003105.5
(22) Anmeldetag: 04.03.2009
(51) Int. Cl.: B23P 15/00, F01D 5/30, B23K 26/00, B23K 37/08

(54) **Fertigungsverfahren für einen Turbinenläufer**
Manufacturing method for a turbine rotor
Procédé de fabrication d'un rotor de turbine

(43) Veröffentlichungstag der Anmeldung: 08.09.2010
(73) Patentinhaber: Siemens Aktiengesellschaft, 80333 München (DE)
(72) Erfinder: Kleinhaus, Michael, 45475 Mülheim an der Ruhr (DE); Richter, Christoph Hermann, Dr., 49477 Ibbenbüren (DE)

(56) Entgegenhaltungen:
- WO-A-2008/103239
- DE-A1- 4 326 236
- US-A- 6 002 102

## Beschreibung

### Beschreibung

Die Erfindung bezieht sich auf einen Turbinenläufer, insbesondere auf einen Niederdruck-Läufer gemäß dem Oberbegriff des Patentanspruchs 12. Die Erfindung bezieht sich weiterhin auf ein Fertigungsverfahren für einen solchen Turbinenläufer gemäß dem Oberbegriff des Patentanspruchs 1. Ein Turbinenläufer umfasst üblicherweise eine (Läufer-)Welle, welche an ihrem Umfang mit einer Reihe von Turbinenschaufeln bestückt ist. Jede Schaufel ist in der Regel mit einem Schaufelfuß in einer korrespondierenden Nut der Welle verankert. Diese Nuten sind üblicherweise durch spanende Bearbeitung in die Welle eingebracht. Weiterhin sind normalerweise zusätzliche Nuten zur Befestigung von Sicherungsteilen in die Welle eingefräst oder gedreht. Ein solches Festigungsverfahren bzw. ein solcher Turbinenläufer ist aus der FR 2 824 870 bekannt.

An diesen oft vergleichsweise scharfkantigen Nuten besteht eine erhöhte Gefahr einer Rissbildung aufgrund von sogenannter Spannungsrisskorrosion (SpRK), da an diesen Kanten besonders hohe Zugspannungen im Werkstoff der Welle auftreten. Um die Zugspannungen - und damit die Gefahr der SpRK - im Kantenbereich zu reduzieren, werden die Kanten der Läuferwelle üblicherweise angefast.

Nachteiligerweise weisen herkömmliche Wellenläufer oft Kanten auf, die für eine automatische Bearbeitung sehr schlecht oder gar nicht zugänglich sind. Eine solche schlecht zugängliche Kante wird in der Regel manuell, unter Verwendung eines kleinen, pressluftbetriebenen Schleifwerkzeugs ("Prelo") angefast. Diese Bearbeitungsweise ist einerseits vergleichsweise zeitaufwändig. Andererseits hängt die Qualität der Fase stark von den individuellen Fähigkeiten des Bearbeiters ab, und ist somit schlecht reproduzierbar.

Aufgabe der Erfindung ist es, ein reproduzierbares Fertigungsverfahren anzugeben, das zur Verminderung von Spannungsrisskorrosion an einer, insbesondere schlecht zugänglichen, Kante eines Turbinenläufers besonders geeignet ist. Weiterhin ist es Aufgabe der Erfindung, einen einfach herstellbaren, sowie gegen Spannungsrisskorrosion besonders unempfindlichen Turbinenläufer anzugeben.

Bezüglich des Fertigungsverfahrens wird diese Aufgabe erfindungsgemäß gelöst durch ein Fertigungsverfahren für einen Turbinenläufer, insbesondere für einen Niederdruck-Läufer, bei dem in dessen Läuferwelle in einem Vorfertigungsschritt durch spanende Bearbeitung mindestens eine Nut eingebracht wird, und bei dem in einem Umform-Schritt eine bei der Vorfertigung entstandene Kante der Läuferwelle zumindest teilweise durch Bestrahlung mit einem Laserstrahl derart bei einer Umformtemperatur angeschmolzen wird, dass diese Kante abgerundet wird. Danach ist ein Fertigungsverfahren für einen Turbinenläufer vorgesehen, bei dem in die Läuferwelle des Turbinenläufers zunächst in einem Vorfertigungsschritt durch spanende Bearbeitung mindestens eine Nut eingebracht wird. Als spanendes Bearbeitungsverfahren ist dabei bevorzugt - je nach Art und/oder Lage der Nut - Drehen oder Fräsen vorgesehen. Anschließend wird in einem Umform-Schritt eine bei der Vorfertigung entstandene Kante der Läuferwelle - zumindest teilweise - durch Bestrahlung mit einem Laserstrahl auf eine Umformtemperatur erhitzt, aufgrund der der Werkstoff im Bereich der Kante anschmilzt. Die Kante wird hierbei durch das Anschmelzen - bedingt durch die Oberflächenspannung des Werkstoffs - abgerundet.

Das Verfahren wird insbesondere bei einem Niederdruck-Läufer eingesetzt, d.h. bei einem Turbinenläufer, der bestimmungsgemäß im Betrieb mit Dampf bei einem Druck von etwa 4 bis 20 bar beaufschlagt wird.

Das vorgestellte Fertigungsverfahren birgt eine Reihe von Vorteilen: Zum Einen werden durch die verfahrensgemäß erzielte Abrundung der Kante formbedingte Spannungsspitzen im Bereich der Kante besonders effektiv vermieden. Insbesondere sind abgerundete Kanten hierdurch in der Regel besser gegen Spannungsrisskorrosion geschützt als angefaste Kanten. Zum Anderen ist das Verfahren durch den lasergestützten Umformprozess gut automatisierbar und damit sowohl schnell als auch reproduzierbar.

Des Weiteren wird durch den lasergestützten Umformprozess eine besonders hohe Oberflächengüte im Bereich der Kante erreicht. Zusätzlich erfolgt die Bearbeitung der Kante nicht spanend. Für die Güte der Materialoberfläche nachteilige Riefen oder sogenannte "Rattermarken", wie sie typischerweise bei der üblichen spanenden Kantenbearbeitung auftreten, können bei der erfindungsgemäßen Bearbeitung vorteilhafterweise nicht entstehen. Zudem erfolgt die Bearbeitung kontaktlos, so dass ein Abrutschen des Bearbeitungswerkzeuges, wie es bei einer manuellen Bearbeitung mit einem Schleifwerkzeug leicht vorkommen kann, sicher vermieden wird. Hierdurch wird die Kante vorteilhafterweise reproduzierbar und gleichmäßig abgerundet.

Die umzuformende Kante wird vorzugsweise unter kontinuierlicher Bewegung des Laserstrahls "abgefahren". Die im Werkstoff der Läuferwelle unter Einwirkung des Laserstrahls erzeugte Temperatur wird hierbei vorzugsweise durch Einstellung der Stellgeschwindigkeit des Laserstrahls, also der Geschwindigkeit, mit der der Laserstrahl quer zur Oberfläche der Welle propagiert, gesteuert. Zusätzlich oder alternativ kann diese Temperatur aber auch durch Variation der Laserleistung und/oder der Fokussierung des Laserstrahls gesteuert werden.

Dabei werden Leistung, Stellgeschwindigkeit und Fokussierung vorzugsweise derart aufeinander abgestimmt, dass im Bereich der Kante eine vorgegebene Umformtemperatur, insbesondere etwa 1500°C erreicht wird.

Durch das Erhitzen der Kante entsteht, ähnlich wie beim Schweißen, eine sogenannte Wärmeeinflusszone (WEZ), also ein Bereich im Werkstoff, der bezüglich seines Gefüges durch die Temperatur beeinflusst wird.

Erkanntermaßen bietet ein größerer Radius der Kante eine besonders hohe Widerstandsfähigkeit gegen SpRK, ist jedoch mit einer vergleichsweise großen WEZ verbunden. Die Herstellung einer solchen Kante ist zudem vergleichsweise zeit- und energieaufwändig. Im Gegensatz hierzu bietet ein kleinerer Radius nur einen vergleichsweise geringen Schutz gegen SpRK, geht aber mit einer kleineren WEZ einher und ist unaufwändiger herzustellen.

Eine bevorzugte Verfahrensvariante trägt diesen einander widerstrebenden Vor- und Nachteilen Rechnung, indem der Radius und entsprechend die Größe der WEZ gezielt nach Maßgabe der punktuellen Spannungsbelastung variiert wird.

In Kantenbereichen mit vergleichsweise geringer Spannungsbelastung wird bei einem geringen Leistungseintrag (durch eine geringe Leistung des Laserstrahls und/oder eine hohe Stellgeschwindigkeit) eine vergleichsweise kleiner Radius und eine kleine WEZ erzeugt. Im Extremfall wird hierbei die Kante lediglich entgratet.

In Kantenbereichen mit vergleichsweise hoher Spannungsbelastung wird dagegen bei höherem Leistungseintrag durch die Laserstrahlung ein vergleichsweise größerer Radius und eine vergleichsweise größere WEZ erzeugt, in welcher der Werkstoff durch tiefreichendes Aufschmelzen abgerundet und (zumindest vorerst) aufgehärtet wird.

Diese Verfahrensvariante kann derart eingesetzt werden, dass verschiedene Kanten desselben Läufers mit unterschiedlich stark ausgeprägten Radien versehen werden, jede Kante aber über ihre jeweilige Länge homogen behandelt wird. Vorzugsweise ist aber vorgesehen, im Rahmen des Verfahrens die Größe des Radius und damit der WEZ auch über die Länge einer und derselben Kante zu variieren.

Die Kante wird in diesem Fall beispielsweise in einem ersten Teilabschnitt ihrer Länge unter vergleichsweise geringem Leistungseintrag nur entgratet, während sie in einem anderen, besonders spannungsrissgefährdeten, Teilabschnitt ihrer Länge unter vergleichsweise höherem Leistungseintrag abgerundet und aufgehärtet wird.

Insbesondere im Zusammenhang mit einem Aufhärten des Werkstoffs in der WEZ ist in zweckmäßiger Ausführung des Verfahrens nach dem Umform-Schritt ein Anlass-Schritt vorgesehen, in dem die Kante erneut mit einem Laserstrahl bestrahlt wird. Im Vergleich zu dem Umform-Schritt und der hier erreichten Umformtemperatur wird im Anlass-Schritt eine (materialabhängige) geringere Anlasstemperatur von insbesondere etwa 600°C (insbesondere bei Verwendung eines Stahls der Qualität 26CrNiMoV 14-5) eingestellt. Die Steuerung der Anlass-Temperatur erfolgt hierbei wiederum vorzugsweise durch Einstellung der Stellgeschwindigkeit des Laserstrahls, alternativ oder zusätzlich durch Einstellung der Laserleistung und/oder der Fokussierung des Laserstrahls. Der Laserstrahl wird also im Anlassschritt mit vergleichsweise hoher Stellgeschwindigkeit und/oder geringer Laserleistung und/oder geringer Fokussierung über die Kante gefahren. Der Anlass-Schritt wird zweckmäßigerweise ein- oder mehrfach wiederholt, die Kante also mehrere Male mit dem Laserstrahl abgefahren.

Durch die Kombination aus Umform- und Anlass-Schritt wird der Werkstoff vergütet. Der so behandelte Werkstoff erlangt vorteilhafterweise eine hinreichend hohe Härte bei gleichzeitig hoher Zähigkeit.

Vorzugsweise wird auch die Intensität des Anlass-Schrittes bei der Behandlung verschiedener Kanten desselben Läufers, oder auch entlang einer und derselben Kante nach Maßgabe der örtlichen Spannungsbelastung variiert. Dabei werden Kanten oder Kantenabschnitte mit hoher Spannungsbelastung über einen längeren Zeitraum und/oder mit höherer Wiederholungszahl angelassen als Kanten bzw. Kantenabschnitte, für die eine geringere Spannungsbelastung zu erwarten ist. Zweckmäßigerweise wird der Anlass-Schritt für un- und schwachbelastete Kanten bzw. Kantenabschnitte auch gänzlich weggelassen. Die Kante wird somit beispielsweise in einem Teilabschnitt ihrer Länge nur mit dem Umform-Schritt und in einem anderen Teilabschnitt ihrer Länge sowohl mit dem Umform-Schritt als auch mit dem nachfolgenden Anlass-Schritt bearbeitet.

Bevorzugt wird die Läuferwelle, um einer eventuellen Rissbildung bei der Bearbeitung vorzubeugen, vor der Durchführung des Umform-Schritts, insbesondere auf etwa 350°C bis 400°C, vorgewärmt.

Das vorstehend beschriebene Fertigungsverfahren wird insbesondere auf eine Außenkante der Läuferwelle angewendet. Die Bearbeitung einer Innenkante nach dem vorgestellten Verfahren ist jedoch auch denkbar. Von besonderem Vorteil ist das Verfahren zur Behandlung einer sogenannten Stegnut-Kante eines Turbinenläufers.

Als bevorzugter Werkstoff für die Läuferwelle wird ein vergüteter Stahl, insbesondere 26NiCrMoV 14-5, herangezogen.

Bezüglich des Turbinenläufers wird oben genannte Aufgabe erfindungsgemäß gelöst durch die Merkmale des Anspruchs 12. Danach ist ein Turbinenläufer vorgesehen, der eine Läuferwelle umfasst, in welche durch spanende Bearbeitung mindestens eine Nut eingebracht ist. Eine im Wesentlichen durch Einbringen der Nut gebildete Kante, insbesondere eine Stegnut-Kante, der Läuferwelle ist dabei durch Bestrahlung mit einem Laserstrahl abgerundet. In bevorzugter Dimensionierung weist die abgerundete Kante einen Krümmungsradius von 1,5mm bis 3mm, insbesondere etwa 2mm auf.

Vorzugsweise ist nach der Fertigung der Läuferwelle im Bereich der Kante keine Wärmeeinflusszone mehr gebildet, d.h. das Gefüge der Läuferwelle ist durch das Abrunden der Kante in diesem Bereich gegenüber dem restlichen Gefüge möglichst nicht mehr beeinflusst.

Durch das Aufhärten und Vergüten der Kante ist diese (und der gesamte Turbinenläufer) besonders gut gegen SpRK geschützt.

Nachfolgend wird ein Ausführungsbeispiel der Erfindung anhand einer Zeichnung näher erläutert.

Darin zeigen:
- FIG 1: in schematischer, perspektivischer Darstellung einen quergeschnittenen Turbinenläufer, und
- FIG 2: einen Ausschnitt II aus FIG 1.

Einander entsprechende Teile sind in allen Figuren stets mit den gleichen Bezugszeichen versehen.

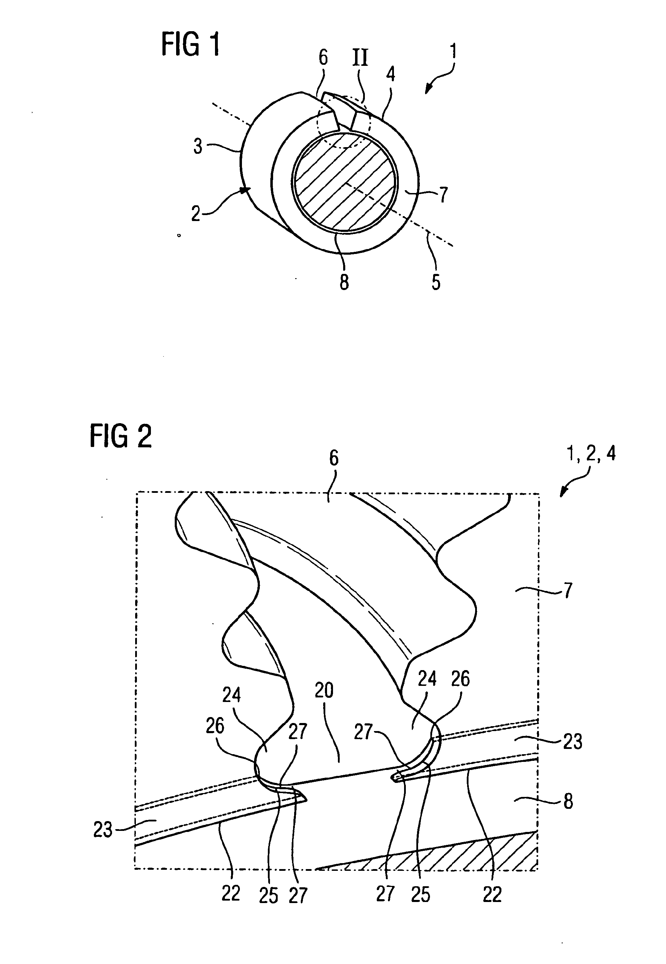

FIG 1 zeigt einen quergeschnitten und stark vereinfacht, insbesondere nicht maßstabgetreu, dargestellten Turbinenläufer 1. Bei dem dargestellten Turbinenläufer 1 handelt es sich um einen Niederdruck-Läufer, der für einen Dampfdruck von etwa 4 bis 20 bar ausgelegt ist. Der Turbinenläufer 1 umfasst eine Läuferwelle 2 (hier aus Stahl der Qualität 26NiCrMoV 14-5), sowie eine Vielzahl von (nicht dargestellten) Turbinenschaufeln, die am Umfang 3 der Läuferwelle 2 angebracht sind. Die Darstellung zeigt einen Wellenabschnitt 4 der Läuferwelle 2, der mit einer sogenannten "Stufe" des Turbinenläufers 1 korrespondiert. Mehrere solcher Wellenabschnitte 4 sind in Axialrichtung 5 des Turbinenläufers 1 einstückig aneinandergereiht. In jedem Wellenabschnitt 4 ist eine Reihe von Turbinenschaufeln gleichmäßig über den Umfang 3 verteilt.

Der Wellenabschnitt 4 ist zum Einen über den Umfang 3 gleichmäßig mit einer Vielzahl von Führungsnuten 6 versehen, die jeweils zur Aufnahme eines Fußes einer der Turbinenschaufeln dienen, von denen hier exemplarisch nur eine Führungsnut 6 dargestellt ist. Jede Führungsnut 6 ist hier im Wesentlichen in Axialrichtung 5 leicht gekrümmt in den Wellenabschnitt 4 eingefräst.

Zum Anderen ist in den Wellenabschnitt 4 an seiner (in der Darstellung sichtbaren) Stirnseite 7 eine umlaufende Sicherungsnut 8 zur Aufnahme mehrerer (nicht dargestellter) Sicherungsbleche eingedreht. Jedes Sicherungsblech dient zur axialen Sicherung der Turbinenschaufeln. Der Wellenfortsatz (bzw. die weiteren Wellenabschnitte 4) ist etwa auf axialer Höhe der Sicherungsnut 8 abgeschnitten.

In FIG 2 ist ein Ausschnitt II aus FIG 1 stark vergrößert und detaillierter dargestellt. FIG 2 ist zu entnehmen, dass die Führungsnut 6 als sogenannte Tannenbaum-Nut ausgeführt ist. Andere Nut-Formen, wie beispielsweise eine SchwalbenschwanzNut, sind hierbei auch denkbar.

Die Sicherungsnut 8 umfasst in ihrem radial äußeren Rand 22 eine Stegnut 23 (gestrichelt dargestellt), welche in Form einer Hinterschneidung in den Wellenabschnitt 4 eingedreht ist. In diese Stegnut 23 wird bestimmungsgemäß ein Steg des Sicherungsbleches eingelegt, um das Sicherungsblech axial zu fixieren.

Die Stegnut 23 ist derart in den Wellenabschnitt 4 eingebracht, dass sie die Führungsnuten 6 kreuzt. In den Bereichen, in welchen die Stegnut 23 eine der Führungsnuten 6 kreuzt, ist die Stegnut 23 unterbrochen. Hierdurch entsteht an beiden Flanken 24 der jeweiligen Führungsnut 6, im Wesentlichen im Bereich ihres Nutgrunds 20, beidseitig jeweils eine Stegnut-Kante 25. Jede Stegnut-Kante 25 hat dabei im Wesentlichen in etwa eine U-Form (entsprechend der Nutform der Stegnut 23).

Da axial auf die Turbinenschaufeln wirkende Kräfte über den Steg bzw. das Sicherungsblech auf den Turbinenläufer 1 übertragen werden, stehen die Stegnut-Kanten 25 im Betrieb des Turbinenläufers 1 unter Zugbelastung und sind somit besonders spannungsrissgefährdet.

Zudem sind die Stegnut-Kanten 25 für eine maschinelle Bearbeitung nur sehr schlecht zugänglich. Daher werden die Stegnut-Kanten 25 zur Reduzierung der Spannungsrisskorrosion jeweils mit einem Laserstrahl bearbeitet.

Vor der Bearbeitung wird die Läuferwelle 2, zumindest im Bereich der Stegnut 23, auf eine Temperatur von etwa 350°C vorgewärmt.

In einem Umform-Schritt wird danach jede Stegnut-Kante 25 kontinuierlich mit dem Laserstrahl abgefahren, so dass der Werkstoff der Läuferwelle 2 im Bereich der Stegnut-Kante 25 kurzzeitig auf eine Umformtemperatur von etwa 1500°C erhitzt wird. Hierdurch wird die Stegnut-Kante 25 angeschmolzen und abgerundet. Gleichzeitig wird das Material der Läuferwelle 2 im Bereich der Stegnut-Kante 25 aufgehärtet.

Für die Bestrahlung wird beispielsweise ein Nd:YAG-, IR-, CO₂-, oder Dioden-Laser mit einer Laserleistung von z.B. 1,5 kW verwendet, dessen fokussierter Strahl im Umform-Schritt mit einer definierten Stellgeschwindigkeit an jeder Stegnut-Kante 25 entlanggefahren wird.

Der Laserstrahl wird hierbei im Bereich des - besonders stark spannungsbelasteten Nutgrunds 26 der Stegnuten 23, somit im Krümmungsbereich der Stegnut-Kanten 25, mit geringerer Verstellgeschwindigkeit gefahren als im Bereich der Nutflanken 27. Hierdurch werden die Stegnut-Kanten 25 im Bereich des Nutgrunds 26 stärker aufgeschmolzen und aufgehärtet als im Bereich der Nutflanken 27.

In einem auf den Umform-Schritt folgenden Anlass-Schritt wird die Stegnut-Kante 25 erneut mit dem Laser bestrahlt. Im Anlass-Schritt wird - bei gleicher Laserleistung - der Laserstrahl mit höherer Stellgeschwindigkeit entlang der Stegnut-Kante 25 verfahren als im Umform-Schritt, so dass sich im Bereich der Stegnut-Kante 25 eine geringere Anlasstemperatur von etwa 600°C einstellt. Alternativ oder zusätzlich kann zur Einstellung der geringeren Anlasstemperatur die Laserleistung gegenüber dem Umform-Schritt reduziert und/oder der Laserstrahl mit einer geringeren Fokussierung auf die Stegnut-Kante 25 gerichtet werden.

Auch im Anlass-Schritt wird der Laserstrahl zweckmäßigerweise im Bereich des Nutgrunds 26 der Stegnut 23 mit geringerer Stellgeschwindigkeit verfahren als im Bereich der Nutflanken 27.

Durch das Anlassen wird der Werkstoff im Bereich der Stegnut-Kante 25 entspannt. Der Werkstoff gewinnt hierdurch eine höhere Zähigkeit bei gleichzeitig hoher Festigkeit.

Insbesondere wird der Anlass-Schritt derart durchgeführt, dass jeder im Umform-Schritt aufgehärtete Bereich nach dem Anlassen vergütet ist, so dass nach dem Anlassen möglichst keine WEZ mehr vorhanden ist.

Nach der Bearbeitung weist die Stegnut-Kante 25 schließlich einen Krümmungsradius von etwa 2mm auf.

## Patentansprüche

1. Fertigungsverfahren für einen Turbinenläufer (1), insbesondere für einen Niederdruck-Läufer, bei dem in dessen Läuferwelle (2) in einem Vorfertigungsschritt durch spanende Bearbeitung mindestens eine Nut (6, 23) eingebracht wird, **dadurch gekennzeichnet, dass** bei diesem Verfahren in einem Umform-Schritt eine bei der vorfertigung entstandene Kante (25) der Läuferwelle (2) zumindest teilweise durch Bestrahlung mit einem Laserstrahl derart bei einer Umformtemperatur angeschmolzen wird, dass diese Kante (25) abgerundet wird.

2. Fertigungsverfahren nach Anspruch 1, wobei die Kante eine Stegnut-Kante (25) ist.

3. Fertigungsverfahren nach Anspruch 1 oder 2, wobei in dem Umform-Schritt mit dem Laserstrahl eine Umformtemperatur von etwa 1500°C erzeugt wird.

4. Fertigungsverfahren nach einem der Ansprüche 1 bis 3, wobei die abgerundete Kante (25) anschließend in einem Anlass-Schritt erneut mit einem Laserstrahl bestrahlt wird, und wobei in dem Anlass-Schritt eine im Vergleich zur UmformTemperatur geringere Anlasstemperatur erzeugt wird.

5. Fertigungsverfahren nach Anspruch 4, wobei die Kante (25) in dem Anlass-Schritt zur Erzeugung der Anlasstemperatur bei einer im Vergleich zum Umform-Schritt geringeren Leistung des Laserstrahls bearbeitet wird.

6. Fertigungsverfahren nach Anspruch 4, wobei die Kante (25) in dem Anlass-Schritt zur Erzeugung der Anlasstemperatur bei einer im Vergleich zum Umform-Schritt geringeren Fokussierung des Laserstrahls bearbeitet wird.

7. Fertigungsverfahren nach Anspruch 4, wobei die Kante (25) sowohl in dem Umform-Schritt als auch in dem Anlass-Schritt jeweils in etwa bei der gleichen Leistung des Laserstrahls bearbeitet wird, und
wobei die Kante (25) in dem Anlass-Schritt zur Erzeugung der Anlasstemperatur mit einer im Vergleich zum Umform-Schritt höheren Stellgeschwindigkeit des Laserstrahls abgefahren wird.

8. Fertigungsverfahren nach Anspruch 7,
wobei die Kante (25) in dem Anlass-Schritt mehrmals mit der höheren Stellgeschwindigkeit abgefahren wird.

9. Fertigungsverfahren nach einem der Ansprüche 4 bis 8, wobei die Kante (25) in einem Teilabschnitt ihrer Länge nur mit dem Umform-Schritt und in einem anderen Teilabschnitt ihrer Länge sowohl mit dem Umform-Schritt als auch mit dem Anlass-Schritt bearbeitet wird.

10. Fertigungsverfahren nach einem der Ansprüche 1 bis 9, wobei die Läuferwelle (2) vorgewärmt wird.

11. Fertigungsverfahren nach einem der Ansprüche 1 bis 10, wobei als Werkstoff für die Läuferwelle (2) Stahl, insbesondere 26NiCrMoV 14-5, herangezogen wird.

12. Turbinenläufer (1) mit einer Läuferwelle (2),
in die mindestens eine Nut (6, 23) durch spanende Bearbeitung eingebracht ist, **dadurch gekennzeichnet, dass** eine im Wesentlichen durch Einbringen der Nut (6, 23) gebildete Kante, insbesondere eine Stegnut-Kante (25), der Läuferwelle (2) durch Bestrahlung mit einem Laserstrahl abgerundet ist.

13. Turbinenläufer (1) nach Anspruch 12,
wobei die Kante (25) einen Krümmungsradius von 1,5mm bis 3mm, insbesondere etwa 2mm aufweist.

## Claims

1. Manufacturing process for a turbine rotor (1), in particular for a low-pressure rotor,
in which process at least one groove (6, 23) is introduced by material-removing machining into the rotor shaft (2) of said rotor in a prefabrication step, **characterized in that**, in this process, an edge (25) of the rotor shaft (2) formed during the prefabrication is at least partially melted by irradiation with a laser beam in a deformation step at a deformation temperature in such a manner that said edge (25) is rounded off.

2. Manufacturing process according to Claim 1,
wherein the edge is a web groove edge (25).

3. Manufacturing process according to Claim 1 or 2,
wherein a deformation temperature of about 1500°C is produced in the deformation step with the laser beam.

4. Manufacturing process according to one of Claims 1 to 3,
wherein the rounded-off edge (25) is subsequently irradiated again with a laser beam in a tempering step, and
wherein a tempering temperature which is relatively low in comparison to the deformation temperature is produced in the tempering step.

5. Manufacturing process according to Claim 4,
wherein the edge (25) is machined in the tempering step for producing the tempering temperature with a laser beam power which is relatively low in comparison to the deformation step.

6. Manufacturing process according to Claim 4,
wherein the edge (25) is machined in the tempering step for producing the tempering temperature with a laser beam focussing which is relatively low in comparison to the deformation step.

7. Manufacturing process according to Claim 4,
wherein the edge (25) is machined both in the deformation step and in the tempering step approximately with the same laser beam power, and
wherein the edge (25) is passed over in the tempering step for producing the tempering temperature with a laser beam actuating speed which is relatively high in comparison to the deformation step.

8. Manufacturing process according to Claim 7,
wherein the edge (25) is passed over in the tempering step repeatedly with the relatively high actuating speed.

9. Manufacturing process according to one of Claims 4 to 8, wherein the edge (25) is machined in a partial portion of its length only with the deformation step and in another partial portion of its length both with the deformation step and with the tempering step.

10. Manufacturing process according to one of Claims 1 to 9, wherein the rotor shaft (2) is preheated.

11. Manufacturing process according to one of Claims 1 to 10, wherein the material used for the rotor shaft (2) is steel, in particular 26NiCrMoV 14-5.

12. Turbine rotor (1) comprising a rotor shaft (2),
into which at least one groove (6, 23) is introduced by material-removing machining, **characterized in that** an edge, in particular a web groove edge (25), of the rotor shaft (2) formed substantially by introducing the groove (6, 23) is rounded off by irradiation with a laser beam.

13. Turbine rotor (1) according to Claim 12,
wherein the edge (25) has a radius of curvature of 1.5 mm to 3 mm, in particular about 2 mm.

## Revendications

1. Procédé de fabrication d'un rotor ( 1 ) de turbine, notamment d'un rotor basse pression, dans lequel on ménage au moins une rainure ( 6, 23 ) dans son arbre ( 2 ) de rotor dans un stade de préfabrication par usinage avec enlèvement de copeaux, **caractérisé en ce que** dans ce procédé on fait fondre dans un stade de déformation un bord ( 25 ), créé lors de la préfabrication, de l'arbre ( 2 ) du rotor au moins en partie par exposition à un faisceau laser à une température de déformation telle que ce bord ( 5 ) soit arrondi.

2. Procédé de fabrication suivant la revendication 1, dans lequel le bord est un bord ( 25 ) à rainure pour barrette.

3. Procédé de fabrication suivant la revendication 1 ou 2, dans lequel, dans le stade de déformation par le faisceau laser, on produit une température de déformation d'environ 1500 C°.

4. Procédé de fabrication suivant l'une des revendications 1 ou 2, dans lequel on expose à nouveau à un faisceau laser le bord ( 25 ) arrondi ensuite dans un stade de revenu, et
on produit dans le stade de revenu une température de revenu plus basse que la température de déformation.

5. Procédé de fabrication suivant la revendication 4, dans lequel on traite le bord ( 5 ) dans le stade de revenu pour la production de la température de revenu à une puissance du faisceau laser plus petite qu'au stade de déformation.

6. Procédé de fabrication suivant la revendication 4, dans lequel on traite le bord ( 25 ) dans le stade de revenu pour la production de la température de revenu à une focalisation du faisceau laser plus petite qu'au stade de déformation.

7. Procédé de fabrication suivant la revendication 4, dans lequel on traite le bord ( 25 ) tant dans le stade de déformation qu'également dans le stade de revenu respectivement à la même puissance du faisceau laser et dans lequel on déplace le bord ( 25 ) dans le stade de revenu, pour la production de la température de revenu, à une vitesse du faisceau laser plus grande qu'au stade de déformation.

8. Procédé de fabrication suivant la revendication 7, dans lequel on déplace le bord ( 25 ) dans le stade de revenu plusieurs fois à la vitesse plus grande.

9. Procédé de fabrication suivant l'une des revendications 4 à 8, dans lequel on traite le bord ( 25 ), dans un segment partiel de sa longueur, seulement par le stade déformation et, dans un autre segment partiel de sa longueur, à la fois par le stade de déformation et par le stade de revenu.

10. Procédé de fabrication suivant l'une des revendications 1 à 9, dans lequel on chauffe au préalable l'arbre ( 2 ) du rotor.

11. Procédé de fabrication suivant l'une des revendications 1 à 10, dans lequel on utilise comme matériau pour l'arbre ( 2 ) du rotor de l'acier, notamment 26NiCrMoV 14-5.

12. Rotor ( 1 ) de turbine ayant un arbre ( 2 ) de rotor dans lequel est ménagée au moins une rainure ( 6, 23 ) par usinage avec enlèvement de copeaux, **caractérisé en ce qu'**un bord, formé sensiblement en ménageant la rainure ( 6, 23 ), notamment un bord ( 25 ) à rainure pour une barrette, de l'arbre ( 2 ) du rotor est arrondi par exposition à un faisceau laser.

13. Rotor ( 1 ) de turbine suivant la revendication 12, dans lequel le bord ( 25 ) a un rayon de courbure de 1,5 mm à 3 mm, notamment d'environ 2 mm.
